# EUROPÄISCHE PATENTSCHRIFT

(11) **EP 0 959 288 B1**
(45) Veröffentlichungstag und Bekanntmachung des Hinweises auf die Patenterteilung: **02.04.2003**
(21) Anmeldenummer: 99109749.4
(22) Anmeldetag: 18.05.1999
(51) Int. Cl.: F16L 33/04

(54) **Spannschelle**
Tensioning clamp
Collier de serrage

(30) Priorität: 22.05.1998 DE 19822915
(43) Veröffentlichungstag der Anmeldung: 24.11.1999
(73) Patentinhaber: Rasmussen GmbH, 63477 Maintal (DE)
(72) Erfinder: Anthes, Steffen John, 63303 Dreieich (DE)
(74) Vertreter: Knoblauch, Andreas, Dr.-Ing.

(56) Entgegenhaltungen:
- EP-A- 0 523 600
- DE-A- 3 729 372
- FR-A- 2 620 176
- US-A- 2 874 440
- US-A- 3 110 948

## Beschreibung

Die Erfindung bezieht sich auf eine Vorrichtung zum Verbinden von Fluidleitungen mit wenigstens einem Spannband, dessen Endabschnitte jeweils wenigstens einen geschlossenen Längsschlitz aufweisen, zu Schlaufen zurückgebogen und am Spannband befestigt sind, mit einer ersten und einer zweiten Gelenkhülse, die jeweils in einer der Schlaufen drehbar gelagert und in der Mitte ihrer Längserstreckung mit zwei sich diametral gegenüberliegenden Löchern versehen sind, mit einer einen Kopf aufweisenden Spannschraube, deren Gewindeschaft durch die Schlitze der Schlaufen und durch die Löcher beider Gelenkhülsen hindurchgeführt ist, wobei sich der Kopf an der ersten Gelenkhülse und der Gewindeschaft an der zweiten Gelenkhülse abstützt.

Bei einer bekannten Vorrichtung dieser Art (DE 37 29 372 C2), einer sogenannten Schlauchschelle, sind die Hülsen, bis auf den Bereich der Löcher, über ihren gesamten Umfang zylindrisch. Bei jeder Gelenkhülse ist das eine Loch kreisförmig und das andere etwa vierkantig und mit zwei kreisbogenförmigen und zwei axialen Kanten versehen. Am Umfang des kreisförmigen Loches der ersten Gelenkhülse liegt der Spannschraubenkopf mit seiner radialen Ringfläche in einer Linienberührung an, während der Gewindeschaft der Spannschraube über eine Mutter an den axialen Kanten des viereckigen Loches in der zweiten Gelenkhülse anliegt.

Die Linienberührung zwischen dem Spannschraubenkopf und der ersten Gelenkhülse ergibt eine hohe Flächenpressung mit der Gefahr eines Reibverschleißes zwischen der Gelenkhülse und dem Spannschraubenkopf bei hohen Spannkräften. Die Mutter stellt ein zusätzliches Bauteil dar, das bei der Montage der Vorrichtung, insbesondere einer automatischen Montage, schwierig zu handhaben ist. Die viereckigen Löcher bedeuten eine Schwächung des Querschnitts der Gelenkhülsen. Insbesondere bei einer automatischen Montage der Vorrichtung ist die Sicherstellung einer lagerichtigen Einführung der Gelenkhülsen in die Schlaufen schwierig.

Der Erfindung liegt die Aufgabe zugrunde, eine Vorrichtung der eingangs genannten Art anzugeben, die einfach zu montieren ist und hohen Spannkräften ohne größeren Verschleiß standhält.

Erfindungsgemäß ist diese Aufgabe dadurch gelöst, daß die Gelenkhülsen auf den einander abgekehrten Seiten einen ebenen, sich über die gesamte Länge der Gelenkhülsen erstreckenden Wandabschnitt aufweisen, in dem jeweils eines der Löcher ausgebildet ist, und daß der übrige Wandabschnitt der Gelenkhülsen zylindrisch ist.

Bei dieser Lösung steht zur Abstützung des Spannschraubenkopfes am Umfang des Loches im ebenen Wandabschnitt der ersten Gelenkhülse eine größere Fläche zur Verfügung. Beim Spannen des Spannbandes ist die Flächenpressung zwischen Spannschraubenkopf und Gelenkhülse und demzufolge der Reibungsverschleiß geringer. Die ebenen Wandabschnitte erleichtern eine automatische Montage, da sich die Gelenkhülsen auf einem im Umfangsquerschnitt dem inneren Querschnitt der Gelenkhülsen entsprechenden Zapfen zur axialen Einführung der Gelenkhülsen in die Schlaufen leicht selbsttätig lagerichtig aufstecken lassen, um sie in der vorbestimmten Lage in die Schlaufen einzuführen. Ein weiterer Vorteil besteht darin, daß wegen des geringeren Umfangs der Gelenkhülsen im Vergleich zu kreiszylindrischen Gelenkhülsen der Materialaufwand geringer ist. Auch an den ebenen Wandabschnitten der zweiten Gelenkhülse kann gewünschtenfalls eine Mutter großflächig anliegen.

Vorzugsweise ist jedoch dafür gesorgt, daß das Loch in dem ebenen Wandabschnitt der zweiten Gelenkhülse ein Gewinde aufweist, in das der Gewindeschaft der Spannschraube mit seinem Gewinde eingreift. Hierbei entfällt zum einen eine Mutter. Zum anderen läßt sich auch das Gewinde in dem Loch des ebenen Wandabschnitts leichter und mit mehreren ununterbrochenen Windungen herstellen, die auch bei hohen Spannkräften einen sicheren Eingriff des Gewindes des Gewindeschaftes gewährleisten.

Zusätzlich kann auch das Loch in dem zylindrischen Wandabschnitt der zweiten Gelenkhülse ein Gewinde aufweisen, in das der Gewindeabschnitt mit seinem Gewinde eingreift. Dadurch ist die Ausübung noch höherer Spannkräfte möglich, ohne die Gewinde in den Löchern der zweiten Gelenkhülse zu überlasten.

Sodann ist es vorteilhaft, wenn sich der Kopf der Spannschraube über einen zwischen dem Kopf und dem Gewinde des Gewindeschaftes ausgebildeten Schaftabschnitt mit größerem Umfang als der des Gewindeschaftes an dem ebenen Wandabschnitt der ersten Gelenkhülse abstützt. Bei entsprechend hinreichender axialer Länge dieses Schaftabschnitts liegt dann der Spannschraubenkopf außerhalb der einen Schlaufe des Spannbandes, so daß er mit einem Außenmehrkant für den Angriff eines Spannwerkzeugs versehen sein kann, z.B. eines Schraubenschlüssels, ohne daß die Betätigung des Spannwerkzeugs durch die Schlaufe behindert wird.

Ferner können die Gelenkhülsen aus einem gebogenen Blechstück mit einer über ihre gesamte Länge durchgehenden Stoßfuge bestehen, die im Bereich zwischen dem ebenen Wandabschnitt und dem dem ebenen Wandabschnitt gegenüberliegenden Loch liegt. Hierbei wird die Stoßfuge in der ersten Gelenkhülse nicht unmittelbar durch den Spannschraubenkopf bzw. den Schaftabschnitt zwischen Gewindeschaft und Spannschraubenkopf belastet und der Zusammenhalt der Gelenkhülsen im Bereich der Stoßfugen mit höherer Sicherheit gewährleistet als wenn die Stoßfuge im Bereich eines der Löcher, insbesondere der mit Gewinde versehenen, läge.

Vorzugsweise ist die Stoßfuge bei jeder Gelenkhülse gegenüber dem ebenen Wandabschnitt um 90° in Umfangsrichtung der Gelenkhülse versetzt. In dieser Lage wird die Stoßfuge am geringsten belastet.

Sodann kann dafür gesorgt sein, daß sich der zylindrische Wandabschnitt in Umfangsrichtung der Gelenkhülsen über mehr als 180° erstreckt.

Bei dieser Ausbildung wird verhindert, daß die Schlaufen am radial äußeren Übergang bzw. der radial äußeren Biegekante zwischen dem ebenen Wandabschnitt und dem zylindrischen Wandabschnitt der Gelenkhülsen geknickt werden. Vielmehr können sie weiterhin tangential auf den Umfang des zylindrischen Wandabschnitts stetig übergehen.

Die Erfindung und ihre Weiterbildungen werden nachstehend anhand der Zeichnung eines bevorzugten Ausführungsbeispiels näher beschrieben. Es zeigen:
- Fig. 1: eine Ansicht einer erfindungsgemäßen Schelle in Richtung ihrer Mittelachse,
- Fig. 2: eine Ansicht der Schelle quer zur Mittelachse,
- Fig. 3: eine Seitenansicht einer Gelenkhülse der Schelle nach Fig. 1,
- Fig. 4: eine Axialansicht der Gelenkhülse nach Fig. 3,
- Fig. 5: eine Seitenansicht einer zweiten Gelenkhülse der Schelle und
- Fig. 6: eine Axialansicht der zweiten Gelenkhülse.

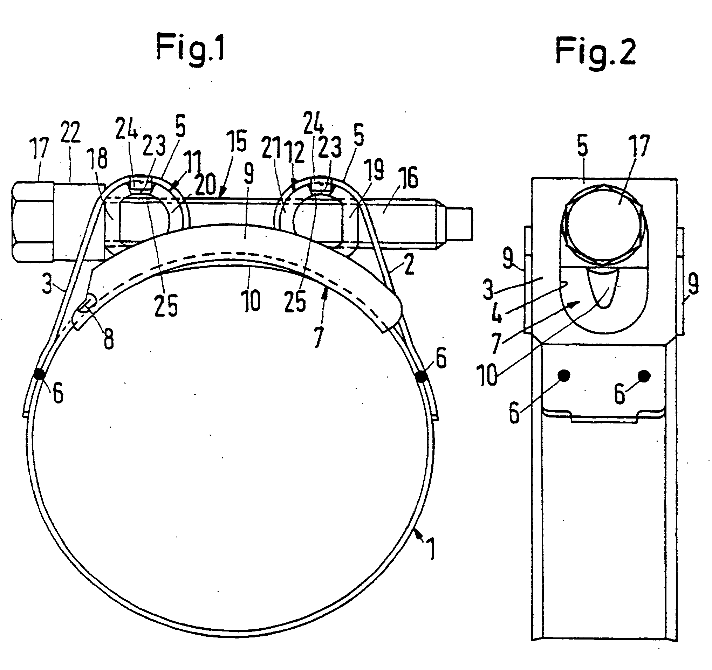

Die als Ausführungsbeispiel in den Fig. 1 und 2 dargestellte Schelle weist ein Spannband 1 aus Stahlblech auf, dessen Endabschnitte Schlaufen 2 und 3 bilden. Die Schlaufen 2 und 3 sind jeweils von zwei geschlossenen Längsschlitzen durchsetzt, von denen nur der eine Schlitz 4 in Fig. 2 in der Schlaufe 3 sichtbar ist. Die beiden Schlitze 4 jeder Schlaufe 2 und 3 sind durch Stege 5 getrennt. Die freien Enden der Schlaufen 2 und 3 sind durch Buckelschweißungen 6 am Hauptteil des Spannbandes 1 außen befestigt. Der Zwischenraum zwischen den Schlaufen 2 und 3 ist durch eine Lasche 7 überbrückt. Die Lasche 7 ist an ihrem einen Ende durch über den radial inneren Abschnitt der Schlaufe 3 umgebogene Lappen 8 von an den Längsseiten radial nach außen ragenden Wänden 9 der Lasche 7 nur an der Schlaufe 3 gelenkig befestigt. In der Mitte ist die Lasche 7 mit einer radial nach innen gedrückten Verstärkungssicke 10 versehen.

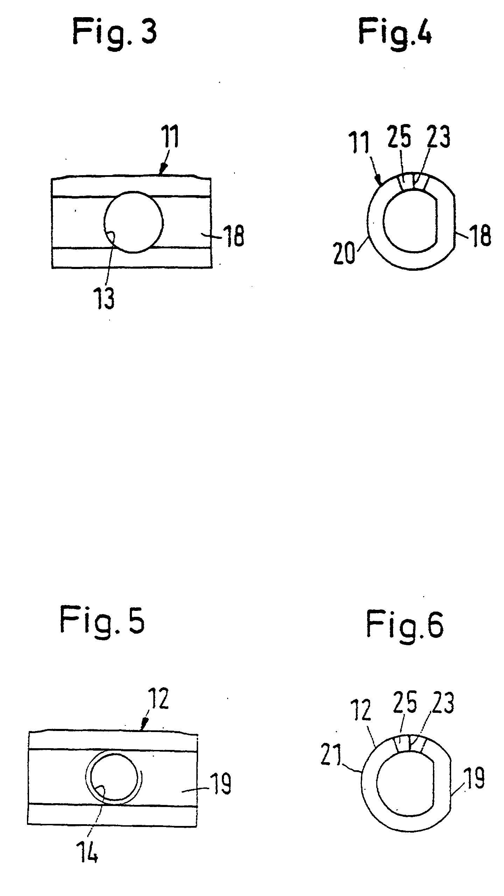

In der Schlaufe 3 ist eine erste Gelenkhülse 11 und in der Schlaufe 2 eine zweite Gelenkhülse 12 drehbar gelagert, die in den Fig. 3 bis 6 einzeln dargestellt sind.

In der Mitte ihrer Längserstreckung sind die Gelenkhülsen 11, 12 jeweils mit zwei sich diametral gegenüberliegenden Löchern 13 bzw. 14 versehen. Durch die Schlitze 4 in den Schlaufen 2 und 3 sowie durch die Löcher 13 und 14 der Gelenkhülsen 11 und 12 ist eine Spannschraube 15 mit ihrem Gewindeschaft 16 hindurchgeführt.

Die Gelenkhülsen 11, 12 haben auf den einander abgekehrten Seiten einen ebenen, sich über die gesamte Länge der Gelenkhülsen 11, 12 erstreckenden Wandabschnitt 18 bzw. 19, in dem jeweils eines der Löcher 13 bzw. 14 ausgebildet ist. Der übrige Wandabschnitt 20 bzw. 21 der Gelenkhülsen 11, 12 ist zylindrisch. Die beiden Löcher 13 in der ersten Gelenkhülse 11 sind glatt durchgehend ausgebildet. Die beiden Löcher 14 in der zweiten Gelenkhülse 12 sind dagegen mit einem dem Gewinde des Gewindeschaftes 16 entsprechenden Gewinde versehen.

Der Kopf 17 der Spannschraube 15 stützt sich über einen zwischen dem Kopf 17 und dem Gewinde des Gewindeschaftes 16 ausgebildeten, zylindrischen Schaftabschnitt 22 mit größerem Umfang als der des Gewindeschaftes 16 an dem ebenen Wandabschnitt 18 der ersten Gelenkhülse 11 ab. Der Gewindeschaft 16 greift mit seinem Gewinde in die Gewinde der beiden Löcher 14 der zweiten Gelenkhülse 12 ein und stützt sich auf diese Weise an der zweiten Gelenkhülse 12 ab.

Die Gelenkhülsen 11, 12 bestehen jeweils aus einem gebogenen Blechstück mit einer über ihre gesamte Länge durchgehenden Stoßfuge 23, die im Bereich zwischen dem ebenen Wandabschnitt 18 bzw. 19 und dem dem ebenen Wandabschnitt gegenüberliegenden Loch 13 bzw. 14 liegt. Vorzugsweise ist die Stoßfuge 23 bei jeder Gelenkhülse 11, 12 gegenüber dem ebenen Wandabschnitt 18, 19 um 90° in Umfangsrichtung der Gelenkhülse versetzt, wobei sich der zylindrische Wandabschnitt 20, 21 in Umfangsrichtung der Gelenkhülsen 11, 12 über mehr als 180° erstreckt.

Die Schlaufen 2, 3 greifen mit an ihren beiden Rändern ausgebildeten, radial nach innen gedrückten Sicken 24 in Ausschnitte 25 an beiden Enden der Gelenkhülsen 11, 12 zur Axialsicherung der Gelenkhülsen 11, 12 in den Schlaufen ein.

Die Ausbildung der Gelenkhülsen 11, 12 mit ebenen Wandabschnitten 18, 19 hat folgende Vorteile: Die Spannschraube 15 kann sich mit ihrem Kopf 17 großflächig an dem Wandabschnitt 18 abstützen. Das Gewinde in dem im ebenen Wandabschnitt 19 der Gelenkhülse 12 ausgebildeten Loch 14 läßt sich einfacher und mit einer größeren Anzahl von umlaufenden Gewindegängen als in dem im zylindrischen Wandabschnitt 21 ausgebildeten Gewindeloch 14 ausbilden, so daß der Gewindeschaft 16 ebenfalls großflächiger abgestützt wird, um hohen Spannkräften standzuhalten. Insgesamt ist der Umfang der Gelenkhülsen 11, 12 wegen der ebenen Wandabschnitte 18, 19 kleiner als der vollständig zylindrischer Gelenkhülsen mit gleichem Zylinderdurchmesser wie der der zylindrischen Wandabschnitte 20, 21. Entsprechend geringer ist der Materialaufwand. Dennoch können die Schlaufen 2, 3 sich großflächig an den zylindrischen Wandabschnitten 20, 21 anlegen, ohne daß ihr am Hauptteil des Spannbandes 1 befestigter Endabschnitt am Übergang der zylindrischen Abschnitte 20, 21 zu den geradlinigen Abschnitten 18, 19 der Gelenkhülsen 11, 12 abgeknickt wird. Der zylindrische Schaftabschnitt 22, der mit seiner einen Schulter unmittelbar am ebenen Wandabschnitt 18 der Gelenkhülse 11 anliegt und andererseits durch den Schlitz 4 nach außen ragt, wirkt als Abstandhalter, so daß der Kopf 17 der Spannschraube 15 mit einem Außenmehrkant versehen werden kann, ohne daß ein zum Spannen der Spannschraube 15 verwendeter Schraubenschlüssel durch die Schlaufe 3 beim Spannen behindert wird, wie es der Fall wäre, wenn der Schraubenkopf 12 in den Schlitz 4 ragen und sich unmittelbar am ebenen Wandabschnitt 18 abstützen würde.

Die Sicke 10 ermöglicht einen Eingriff des Gewindeschaftes 16 in die radial äußere Nut der Sicke 10, um die Schelle möglichst weit öffnen zu können, bevor sich der Gewindeschaft 16 am Boden der Lasche 7 anlegt und ein weiteres Öffnen der Schelle behindert. Ferner lassen sich die Gelenkhülsen 11, 12 leicht automatisch in die Schlaufen 2, 3 axial einführen, da sie aufgrund ihres ebenen Wandabschnitts 18, 19 auf einem im Montageautomat vorgesehenen Einführungsstift für die Gelenkhülsen, dessen Außenkontur der Innenkontur der Gelenkhülsen angepaßt ist, auf einfache Weise selbsttätig lagerichtig aufgeschoben und in die betreffende Schlaufe 2, 3 eingeführt werden können. In der dargestellten Lage der Stoßfuge 23 der Gelenkhülsen 11, 12 ist die Gefahr einer Aufspreizung der Gelenkhülse beim Spannen weitgehend vermieden. Darüber hinaus können die Löcher 13, 14 in den Gelenkhülsen 11, 12 bei Ausbildung der Gelenkhülsen aus Blechstücken in die Blechstücke gestanzt und im Falle der Gelenkhülse 12 mit Gewinde versehen werden, bevor die Blechstücke gebogen werden. Das Stanzen der Löcher in ein Blechstück ist einfacher, als sie in ein entsprechend geformtes Rohr zu stanzen, von dem die Gelenkstücke dann abgeschnitten würden.

Die Erfindung ist nicht nur bei Schlauchschellen mit nur einem Spannband, sondern auch bei Rohrkupplungen mit mehreren Spannbändern anwendbar, z.B. bei einer Rohrkupplung gemäß DE 39 26 626 A1 mit zwei Spannbändern, oder bei einer Rohrkupplung mit einem Spannband und zwei Schlaufen an jedem Ende, durch die jeweils nur eine Gelenkhülse hindurchgeführt ist, oder bei sogenannten Profilschellen.

## Patentansprüche

1. Vorrichtung zum Verbinden von Fluidleitungen mit wenigstens einem Spannband (1), dessen Endabschnitte jeweils wenigstens einen geschlossenen Längsschlitz (4) aufweisen, zu Schlaufen (2, 3) zurückgebogen und am Spannband (1) befestigt sind, mit einer ersten und einer zweiten Gelenkhülse (11, 12), die jeweils in einer der Schlaufen (3, 2) drehbar gelagert und in der Mitte ihrer Längserstreckung mit zwei sich diametral gegenüberliegenden Löchern (13, 14) versehen sind, mit einer einen Kopf (17) aufweisenden Spannschraube (15), deren Gewindeschaft (16) durch die Schlitze (4) der Schlaufen (2, 3) und durch die Löcher (13, 14) beider Gelenkhülsen (11, 12) hindurchgeführt ist, wobei sich der Kopf (17) an der ersten Gelenkhülse (11) und der Gewindeschaft (16) an der zweiten Gelenkhülse (12) abstützt, **dadurch gekennzeichnet, daß** die Gelenkhülsen (11, 12) auf den einander abgekehrten Seiten einen ebenen, sich über die gesamte Länge der Gelenkhülsen (11, 12) erstreckenden Wandabschnitt (18; 19) aufweisen, in dem jeweils eines der Löcher (13, 14) ausgebildet ist, und daß der übrige Wandabschnitt (20; 21) der Gelenkhülsen (11, 12) zylindrisch ist.

2. Vorrichtung nach Anspruch 1, **dadurch gekennzeichnet, daß** das Loch (14) in dem ebenen Wandabschnitt (19) der zweiten Gelenkhülse (12) ein Gewinde aufweist, in das der Gewindeschaft (16) der Spannschraube (15) mit seinem Gewinde eingreift.

3. Vorrichtung nach Anspruch 2, **dadurch gekennzeichnet, daß** das Loch (14) in dem zylindrischen Wandabschnitt (21) der zweiten Gelenkhülse (12) ein Gewinde aufweist, in das der Gewindeschaft (16) mit seinem Gewinde eingreift.

4. Vorrichtung nach einem der Ansprüche 1 bis 3, **dadurch gekennzeichnet, daß** sich der Kopf (17) der Spannschraube (15) über einen zwischen dem Kopf (17) und dem Gewinde des Gewindeschaftes (16) ausgebildeten Schaftabschnitt (22) mit größerem Umfang als der des Gewindeschaftes (16) an dem ebenen Wandabschnitt (18) der ersten Gelenkhülse (11) abstützt.

5. Vorrichtung nach einem der Ansprüche 1 bis 4, **dadurch gekennzeichnet, daß** die Gelenkhülsen (11, 12) aus einem gebogenen Blechstück mit einer über ihre gesamte Länge durchgehenden Stoßfuge (23) bestehen, die im Bereich zwischen dem ebenen Wandabschnitt (18; 19) und dem dem ebenen Wandabschnitt (18; 19) gegenüberliegenden Loch (13; 14) liegt.

6. Vorrichtung nach Anspruch 5, **dadurch gekennzeichnet, daß** die Stoßfuge (23) bei jeder Gelenkhülse (11; 12) gegenüber dem ebenen Wandabschnitt (18; 19) um 90° in Umfangsrichtung der Gelenkhülse (11; 12) versetzt ist.

7. Vorrichtung nach einem der Ansprüche 1 bis 6, **dadurch gekennzeichnet, daß** sich der zylindrische Wandabschnitt in Umfangsrichtung der Gelenkhülsen über mehr als 180° erstreckt.

## Claims

1. A device for connecting fluid lines comprising at least one damping band (1) whose end portions each have at least one closed longitudinal slot (4), are bent back to form loops (2, 3) and are fixed to the clamping band (1), a first and a second pivot sleeve (11, 12) which are respectively mounted rotatably in one of the loops (2, 3) and which are provided at the centre of their longitudinal extent with two mutually diametrally opposite holes (13, 14), a clamping screw (15) which has a head (17) and whose screwthreaded shank (16) is passed through the slots (14) of the loops (2, 3) and through the holes (13, 14) in both pivot sleeves (11, 12), wherein the head (17) is supported at the first pivot sleeve (11) and the screwthreaded shank (16) at the second pivot sleeve (12), **characterised in that** the pivot sleeves (11, 12) on the mutually remote sides have a flat wall portion (18; 19) which extends over the entire length of the pivot sleeves (11, 12) and in each of which is provided a respective one of the holes (13, 14), and that the rest of the wall portion (20; 21) of the pivot sleeves (11, 12) is cylindrical.

2. A device according to claim 1 **characterised in that** the hole (14) in the flat wall portion (19) of the second pivot sleeve (12) has a screwthread into which the screwthreaded shank (16) of the clamping screw (15) engages with its screwthread.

3. A device according to claim 2 **characterised in that** the hole (14) in the cylindrical wall portion (21) of the second pivot sleeve (12) has a screwthread into which the screwthreaded shank (16) engages with its screwthread.

4. A device according to one of claims 1 to 3 **characterised in that** the head (17) of the clamping screw (15) is supported against the flat wall portion (18) of the first pivot sleeve (11) by way of a shank portion (22) which is provided between the head (17) and the screwthread of the screwthreaded shank (16) and which has a larger periphery than the periphery of the screwthreaded shank (16).

5. A device according to one of claims 1 to 4 **characterised in that** the pivot sleeves (11, 12) comprise a bent sheet metal portion with a join (23) which is continuous over its entire length and which is in the region between the flat wall portion (18; 19) and the hole (13; 14) opposite to the flat wall portion (18; 19).

6. A device according to claim 5 **characterised in that** the join (23) in each pivot sleeve (11; 12) is displaced with respect to the flat wall portion (18; 19) through 90° in the peripheral direction of the pivot sleeve (11; 12).

7. A device according to one of claims 1 to 6 **characterised in that** the cylindrical wall portion extends over more than 180° in the peripheral direction of the pivot sleeves.

## Revendications

1. Dispositif de liaison de conduits parcourus par des fluides, comprenant au moins un ruban de serrage (1) dont les régions extrêmes sont respectivement munies d'au moins une fente longitudinale fermée (4), sont enroulées sur elles-mêmes pour former des boucles (2, 3), et sont fixées audit ruban de serrage (1) ; des première et seconde douilles d'articulation (11, 12), qui sont respectivement montées à rotation dans l'une des boucles (3, 2) et sont pourvues, au centre de leur étendue longitudinale, de deux trous (13, 14) diamétralement opposés ; et une vis de serrage (15) qui présente une tête (17), et dont la tige filetée (16) est engagée à travers les fentes (4) des boucles (2, 3) et à travers les trous (13, 14) des deux douilles d'articulation (11, 12), la tête (17) et la tige filetée (16) prenant respectivement appui contre la première douille d'articulation (11), et contre la seconde douille d'articulation (12), **caractérisé par le fait que** les douilles d'articulation (11, 12) comportent, sur les côtés tournés mutuellement à l'opposé, une zone de paroi plane (18 ; 19) qui s'étend sur toute la longueur desdites douilles d'articulation (11, 12), et dans laquelle l'un des trous (13, 14) est respectivement ménagé ; et **par le fait que** la zone de paroi restante (20 ; 21) desdites douilles d'articulation (11, 12) est cylindrique.

2. Dispositif selon la revendication 1, **caractérisé par le fait que** le trou (14), pratiqué dans la zone de paroi plane (19) de la seconde douille d'articulation (12), présente un filetage dans lequel la tige filetée (16) de la vis de serrage (15) pénètre par son filetage.

3. Dispositif selon la revendication 2, **caractérisé par le fait que** le trou (14), pratiqué dans la zone de paroi cylindrique (21) de la seconde douille d'articulation (12), présente un filetage dans lequel la tige filetée (16) pénètre par son filetage.

4. Dispositif selon l'une des revendications 1 à 3, **caractérisé par le fait que** la tête (17) de la vis de serrage (15) est en appui, contre la zone de paroi plane (18) de la première douille d'articulation (11), par l'intermédiaire d'un fût (22) usiné entre ladite tête (17) et le filetage de la tige filetée (16), et possédant un périmètre plus fort que celui de ladite tige filetée (16).

5. Dispositif selon l'une des revendications 1 à 4, **caractérisé par le fait que** les douilles d'articulation (11, 12) sont constituées d'une pièce en tôle cintrée comportant un joint (23) qui s'étend, d'un trait, sur toute la longueur et qui se trouve dans la région située entre la zone de paroi plane (18 ; 19) et le trou (13 ; 14) opposé à ladite zone de paroi plane (18 ; 19).

6. Dispositif selon la revendication 5, **caractérisé par le fait que**, dans chaque douille d'articulation (11 ; 12), le joint (23) est décalé de 90° dans la direction périphérique de ladite douille d'articulation (11 ; 12), vis-à-vis de la zone de paroi plane (18 ; 19).

7. Dispositif selon l'une des revendications 1 à 6, **caractérisé par le fait que** la zone de paroi cylindrique s'étend sur plus de 180° dans la direction périphérique des douilles d'articulation.
